# EUROPEAN PATENT SPECIFICATION

(11) **EP 1 424 238 B1**
(45) Date of publication and mention of the grant of the patent: **07.03.2007**
(21) Application number: 03025183.9
(22) Date of filing: 04.11.2003
(51) Int. Cl.: B60N 2/28

(54) **Seat belt deviation device for infant car seat used with a fixed base**
Vorrichtung zur Umlenkung eines Sicherheitgurtes für Kraftfahrzeug-Kindersitz zur Benutzung mit einer fixirten Basis
Dispositif de déviation d'une ceinture de sécurité pour siège automobile d'enfant utilisé avec une base fixe

(30) Priority: 05.11.2002 GB 0225735; 09.10.2003 GB 0323600
(43) Date of publication of application: 02.06.2004
(73) Proprietor: Equipbaby Limited, Windsor, Berkshire SL4 1DN (GB)
(72) Inventor: Barker, Derick John Martin, Bishampton, Worcestershire WR10 2LU (GB)
(74) Representative: Jaunez, Xavier

(56) References cited:
- DE-A- 3 107 752
- US-A- 6 017 088
- US-A1- 2002 043 840

## Description

The present invention relates to infant car seat apparatus.

Infant car seats are increasingly being used as part of an integrated travel system for babies.

Convenience of installation into both the vehicle and stroller is an important feature. Additionally improvements in safety are introducing fixed bases secured by way of the adult belt into which the infant car seat is retained whilst in the vehicle.

US 2002/0043840 A1 describes a car seat in accordance with the preamble of Claim 1.

The invention proposes a fixing base which is secured by an adult seat belt in a vehicle and which provides a securing means for the infant car seat and incorporates a seat belt deviation device.

The invention provides a device, which provides a means for achieving a deviated condition in the diagonal portion of the seat belt enabling the user to remove the infant car seat without the obstruction of the diagonal belt.

According to the present invention, there is provided a car seat as defined in Claim 1.

The dependent claims set out certain preferred embodiments of the invention.

The above and other aspects of the invention will now be described in further detail, by way of example only, with reference to the accompanying figures in which:
Figure 1 is a side view of a first embodiment of a car seat in accordance with the present invention, having a pivoting arm in a start position (Fig 1-A) and in a deviating position (Fig 1-B);
Figure 2 is a side view of a second embodiment of a car seat in accordance with the present invention, having a flexible link, before use (Fig 2A) and in use (Fig 2B); and
Figure 3 is a side view of a third embodiment of a car seat in accordance with the present invention, having an overhang feature, before use (Fig 3A) and in use (Fig 3B).

The invention provides a car set having a base (2) and car seat shell (1) attached to which is a carry handle (5). The base (2) provides location means for securing an adult belt (9) in a conventional way.

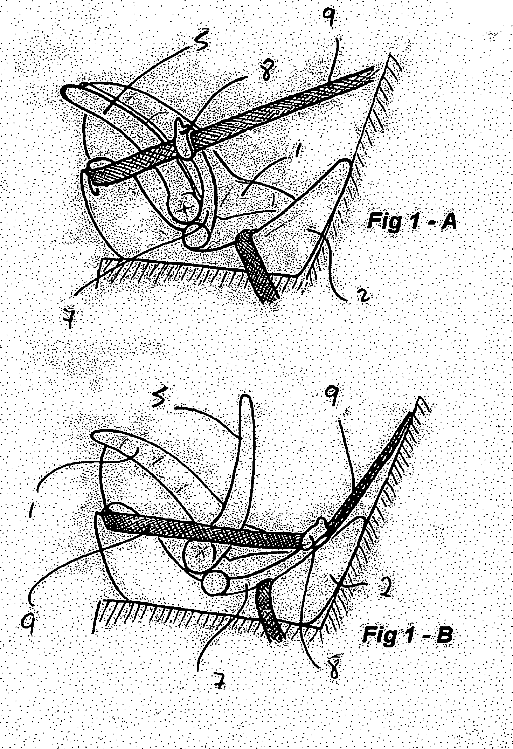

In a first embodiment, the base (2) includes a pivotable arm (7) with an overhang feature (8) which retains the seat belt (9). The arm (7) is pivotable from a start position (Fig 1A) to a set position (Fig 1) such that the belt (9) is deviated so as to allow the user to remove the car seat (1) with reduced obstruction. On returning the car seat (1) to the base (2) the arm (7) is repositioned manually or automatically so enabling the arm (7) to return to the start position and thereby the belt (9) to its original position.

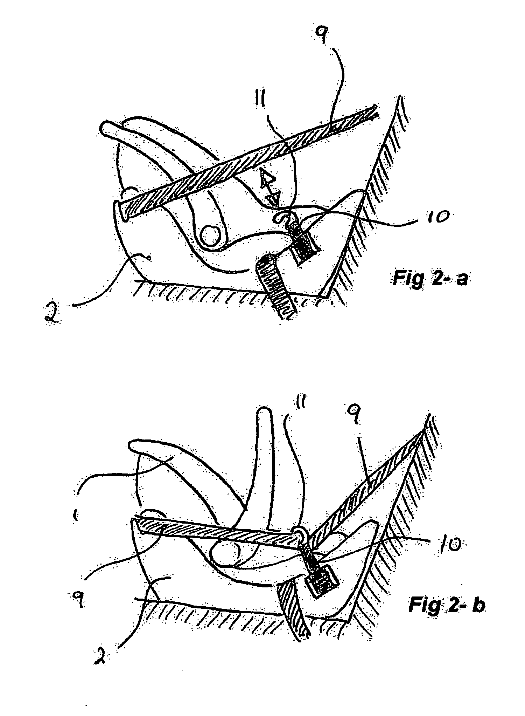

In a second embodiment (Fig 2A-Fig 2B), the base (2) includes a flexible and extendable link (10) which can be manually applied and manually or automatically released. The end of the link has an attachment means (11) to attach to the seat belt.

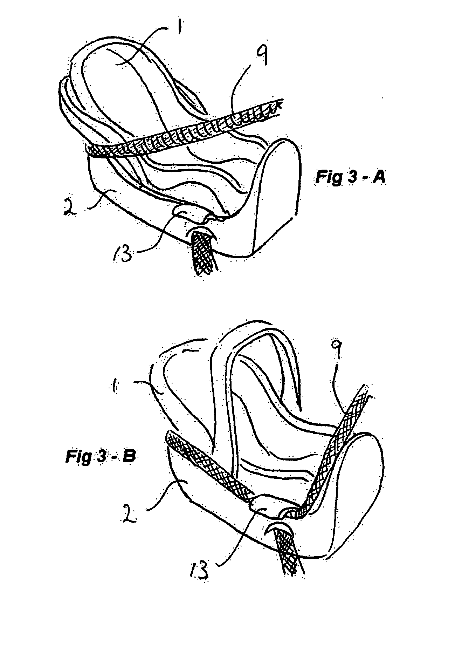

In a third embodiment (Fig 3A-Fig 3B), base (2) incorporates an overhanging feature (13) as part of the main base (2).

The following statements set out certain features of preferred embodiments of the invention:
1. A car seat with a securing base (2) secured in a vehicle using a three point lap and diagonal belt (9). Said base incorporates a belt deviation device as described, which provides a retaining means for the diagonal belt portion, when deviating the belt prior to removing the car seat from the base.
2. In one arrangement, the deviation device (7) interfaces with the car seat installation operation so as to permit a reset of the device into a condition which reinstates the diagonal belt portion after refitting the car seat into the base.
3. In one embodiment, the deviation device includes a pivoting arm link, which can be displaced to deviate the webbing and is released automatically or manually to return to the start position when the car seat is reinstalled into the base.
4. Alternatively, the deviation device comprises a flexible and extendable link (10) with an attachment means (11) at one end is manually applied as a link between the base and the diagonal belt (9) portion, which is retractable to achieve a deviation.
5. Alternatively, the base (2) including an overhanging feature (13) under which the seat belt can be retained to achieve the deviation.
6. The seat may include a deviation device positioned or operational on both sides of the base.

## Claims

1. An infant car seat apparatus for a vehicle having a seat and a three-point seat belt system having lap and diagonal portions, the apparatus comprising a base (2) and a removable infant seat (1), wherein the base (2) is securable to a vehicle seat by the three point seat belt system; **characterised in that** said base (2) further comprises a belt deviation device (7, 10, 13) providing a retaining means for the diagonal belt portion (9) of the belt system and deviation means for deviating said diagonal belt portion prior to removal of said infant seat (1) from said base (2).

2. An infant car seat apparatus as claimed in Claim 1 in which the belt deviation device (7, 10, 13) engages the seat (1) when said infant seat is installed with the base (2), and wherein the arm is moveable between a position in which the diagonal belt portion is engaged, and a position in which the device is disengaged from said diagonal belt portion, during said installation process.

3. An infant car seat apparatus as claimed in Claim 1 or Claim 2 wherein the deviation device (7) is a pivotable arm.

4. An infant car seat apparatus as claimed in Claim 1 or Claim 2 wherein the deviation device is a flexible extendible link arm (10) with attachment means (11) at one end, said attachment means (11) being capable of forming a link between the base (2) and the diagonal belt portion (9).

5. An infant car seat apparatus as claimed in Claim 1 or Claim 2 wherein the belt deviation device (13) is an overhanging feature under which the belt portion (9) is retainable.

6. An infant car seat apparatus as claimed in any preceding claim in which a belt deviation device (7, 10, 13) is positioned on both sides of the base (2).

7. An infant car seat apparatus as claimed in any one of Claims 1 to 6 wherein the belt deviation device (7, 10, 13) is operable in both sides of the base.

## Patentansprüche

1. Kinderautositzvorrichtung für ein Fahrzeug mit einem Sitz und einem Drei-Punkt-Gurtsystem mit Schoß- und Diagonalteilen, wobei die Vorrichtung eine Basis (2) und einen abnehmbaren Kindersitz (1) aufweist und die Basis (2) durch das Drei-Punkt-Gurtsystem an einem Fahrzeugsitz befestigbar ist, **dadurch gekennzeichnet, dass** die Basis (2) ferner eine Gurtumlenkungsvorrichtung (7, 10, 13) umfasst, die ein Rückhaltemittel für den diagonalen Gurtteil (9) des Gurtsystems und ein Umlenkungsmittel zum Umlenken des diagonalen Gurtteils vor Abnahme des Kindersitzes (1) von der Basis (2) bildet.

2. Kinderautositzvorrichtung nach Anspruch 1, in der die Gurtumlenkungsvorrichtung (7, 10, 13) an dem Sitz (1) angreift, wenn der Kindersitz an der Basis (2) montiert ist, und wobei der Arm während des Montagevorgangs zwischen einer Stellung, in der der diagonale Gurtteil in Eingriff steht, und einer Stellung, in der die Vorrichtung von dem genannten diagonalen Gurtteil freigegeben ist, bewegbar ist.

3. Kinderautositzvorrichtung nach Anspruch 1 oder 2, in der die Umlenkungsvorrichtung (7) ein schwenkbarer Arm ist.

4. Kinderautositzvorrichtung nach Anspruch 1 oder 2, in der die Umlenkungsvorrichtung ein flexibler ausziehbarer Verbindungsarm (10) ist, der an einem Ende Befestigungsmittel (11) aufweist, wobei die Befestigungsmittel (11) eine Verbindung zwischen der Basis (2) und dem diagonalen Gurtteil (9) bilden können.

5. Kinderautositzvorrichtung nach Anspruch 1 oder 2, in der die Umlenkungsvorrichtung (13) ein hervorstehendes Element ist, unter dem der Gurtteil (9) gehalten werden kann.

6. Kinderautositzvorrichtung nach einem der vorhergehenden Ansprüche, in der an beiden Seiten der Basis (2) eine Gurtumlenkungsvorrichtung (7, 10, 13) angeordnet ist.

7. Kinderautositzvorrichtung nach einem der Ansprüche 1 bis 6, in der die Gurtumlenkungsvorrichtung (7, 10, 13) an beiden Seiten der Basis betriebsfähig ist.

## Revendications

1. Ensemble de siège de voiture pour enfant, pour un véhicule ayant un siège et un système de ceinture de sécurité à trois points, ayant des parties de ceinture ventrale et diagonale, ledit ensemble comprenant une base (2) et un siège d'enfant amovible (1), dans lequel la base (2) peut être fixée sur un siège de véhicule grâce au système de ceinture de sécurité à trois points, **caractérisé en ce que** ladite base (2) comprend en outre un dispositif de déviation de la ceinture (7, 10, 13) fournissant un moyen de retenue pour la partie de ceinture diagonale (9) du système de ceinture et un moyen de déviation permettant de dévier ladite partie de ceinture diagonale (9) avant l'enlèvement dudit siège d'enfant (1) hors de ladite base (2).

2. Ensemble de siège de voiture pour enfant selon la revendication 1, dans lequel le dispositif de déviation de la ceinture (7, 10, 13) s'engage avec le siège (1) lorsque ledit siège d'enfant est installé avec la base (2), et dans lequel le bras est mobile entre une position dans laquelle la partie de ceinture diagonale (9) est engagée, et une position dans laquelle le dispositif est dégagé de ladite partie de ceinture diagonale (9), au cours dudit processus d'installation.

3. Ensemble de siège de voiture pour enfant selon la revendication 1 ou la revendication 2, dans lequel le dispositif de déviation (7) est un bras qui peut pivoter.

4. Ensemble de siège de voiture pour enfant selon la revendication 1 ou la revendication 2, dans lequel le dispositif de déviation est un bras de liaison souple et extensible (10), muni à une extrémité d'un moyen de fixation (11), ledit moyen de fixation (11) pouvant former une liaison entre la base (2) et la partie de ceinture diagonale (9).

5. Ensemble de siège de voiture pour enfant selon la revendication 1 ou la revendication 2, dans lequel le dispositif de déviation de la ceinture (13) est un élément en surplomb, sous lequel la partie de ceinture (9) peut être retenue.

6. Ensemble de siège de voiture pour enfant selon l'une quelconque des revendications précédentes, dans lequel un dispositif de déviation de la ceinture (7, 10, 13) est disposé des deux côtés de la base (2).

7. Ensemble de siège de voiture pour enfant selon l'une quelconque des revendications 1 à 6, dans lequel le dispositif de déviation de la ceinture (7, 10, 13) peut fonctionner des deux côtés de la base (2).
